(19) Europäisches Patentamt
European Patent Office
Office européen des brevets

(11) EP 1 720 163 A1

(12) **EUROPEAN PATENT APPLICATION**

(43) Date of publication:
**08.11.2006 Bulletin 2006/45**

(51) Int Cl.:
***G11B 7/244*** *(2006.01)* ***G02B 5/30*** *(2006.01)*

(21) Application number: **05009865.6**

(22) Date of filing: **05.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Fraunhofer-Gesellschaft zur Förderung der angewandten Forschung e.V.**
**80686 München (DE)**

(72) Inventors:
- **Zakrevskyy, Yuriy**
  **14476 Potsdam (DE)**
- **Faul, Charl**
  **BS57PF Bristol (GB)**
- **Stumpe, Joachim**
  **14641 Nauen (DE)**

(74) Representative: **Olgemöller, Luitgard Maria**
**Leonhard - Olgemöller - Fricke,**
**Patentanwälte,**
**Postfach 10 09 62**
**80083 München (DE)**

(54) **Film forming photosensitive materials for the light induced generation of optical anisotropy**

(57) This invention relates to a self supporting or substrate-supported film or layer of a photosensitive material comprising a water insoluble complex having one of the following sum formulae (I) to (IV)

$$n\,[R\text{-}P\text{-}R']^{m^*+}\; m\,[T]^{n^*-} \quad (I)$$

or

$$m\,[T]^{n^*+}\; n\,[R\text{-}P\text{-}R']^{m^*-} \quad (II)$$

$$n\,[R^1\text{-}Q\text{-}R^{1'}]^{m^*+}\; m\,[T]^{n^*-} \quad (III)$$

or

$$m\,[T]^{n^*+}\; n\,[R^1\text{-}Q\text{-}R^{1'}]^{m^*-} \quad (IV)$$

wherein
[R-P-R'] and [$R^1$-Q-$R^{1'}$] , respectively, are photosensitive tectonic units the photosensitive part of which may undergo a photoreaction, selected from photoisomerizations, photocycloadditions and photoinduced rearrangements, and
wherein P is a group capable of photoisomerization,
Q is a group capable of participating in a photocycloaddition or photoinduced rearrangement reaction, or in a photooxidation reaction,
at least one of R and R' is selected from optionally substituted or functionalized aromatic, preferably aryl-containing groups, and at least one of R and R' is positively or negatively charged, with the proviso that if P is -N=N, R and R' both are independently selected from optionally substituted or functionalised aromatic, preferably aryl-containing groups, and if P has a different meaning, the other of R and R' can alternatively be or contain a straight or branched aliphatic group,
$R^1$ and $R^{1'}$ are independently selected either from optionally substituted or functionalized groups, both or at least one of which being an optionally substituted or functionalized aromatic, preferably aryl-containing group while the other alternatively can be or contain a straight or branched aliphatic group, or from such groups which together with Q form an aromatic system, preferably an aryl ring or heteroaryl ring, with the proviso that either at least one of $R^1$ and $R^{1'}$ is positively or negatively charged or the ring structure and/or a substituent thereon will carry at least one positive or negative charge,
[T] is an organic, tectonic unit carrying at least one positively or negatively charged group and at least one hydrophobic group, and
m. m*, n and n* are preferably selected from or from about 1, 2, 3, 4, 5, 6, 7 or 8, with the proviso that the values of m and m* are identical or do not differ more than 10% from each other and that the values of n and n* are identical or do not differ more than 10% from each other;or comprising a mixture of such complexes.

EP 1 720 163 A1

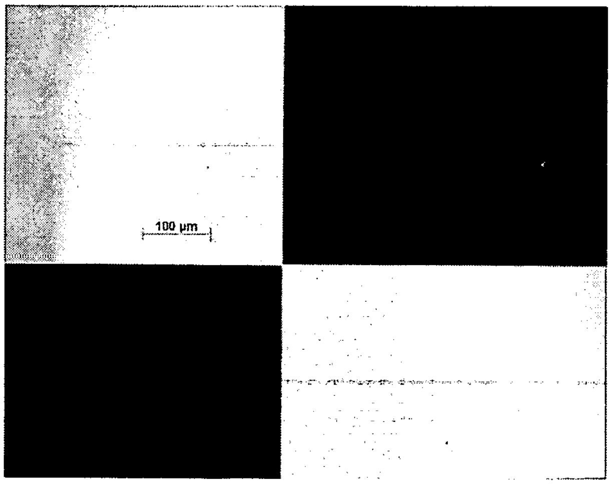


FIGURE 4a

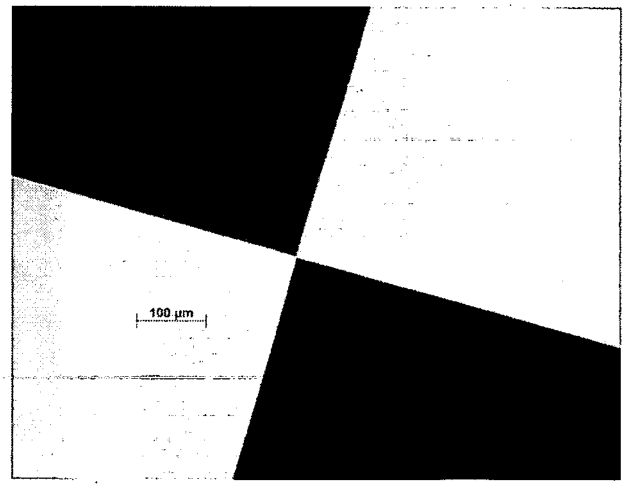


FIGURE 4b

## Description

The invention relates to ionic self-assembling (ISA) complexes containing photosensitive units which form self supporting films or layers/coatings on a substrate. Non-scattering films are formed from solutions of the water insoluble complexes in organic solvents. Such films or layers can be irradiated in a specific manner, and the irradiated films/layers can be used as polarizing films, photo-alignment films, and devices for reversible optical data storage using the complexes.

A variety of films are known which can be used for a variety of optical properties:

1. Light-polarizing films

Polarizing films have been generally produced by incorporating iodine or dichroic dyes as a polarizing element into stretched or oriented films made of polyvinyl alcohol or its derivatives, or into oriented polyene films prepared by dehydrochlorinating a polyvinyl chloride film or dehydrochlorinating a polyvinyl alcohol film to form a polyene structure in the films.

Of these light-polarizing films, those in which iodine is used as a polarizing element are poor in resistance to moisture and heat although they are excellent in the initial polarization performance. Consequently, when they are used for a long period of time in high-temperature and high-humidity conditions, their durability becomes a problem. In order to improve the durability, various methods have been proposed, for example, a method of strengthening by treatment of these films with aqueous solutions containing formalin or boric acid, a method of using as a protecting film a high molecular weight polymer film, which is low in permeability to moisture, and the like. However the durability is still unsatisfactory in high-temperature and high-humidity conditions. Such films are quite thick (some hundreds of micrometers).

Stretched light-polarizing films in which a dichroic dye is used as a polarizing element are superior in the resistance to moisture and heat as compared with those in which iodine is used as a polarizing element. They are however inferior in the polarization performance as compared with the latter. Furthermore, some of them change considerably in color under high-temperature conditions depending upon the dye used. Such stretched films are also quite thick.

A method is also available for manufacturing a light-polarizing film by aligning dichroic dyes in their lyotropic phase in water. This is followed by a drying step to remove the rest of the water and produce highly ordered crystalline film. By this method high dichroic ratios are achieved, and the materials possess comparably high thermal stability. However,these light-polarizing films are poor in resistance to moisture and so need a protection layer. Furthermore, such films are bluish and show crashes due the trying process and the patterning by photoalignment is difficult.

Many difficulties arise when trying to manufacture fine polarizers such as polarizers having a width of not greater than about 200 micrometers. Cutting a dyed alignment film is the only way presently used to prepare such fine polarizers.

It is also known that one can mix a dye with a reactive liquid crystal material and orient this guest-host mixture in a liquid crystal cell or on a substrate with anisotropic layer and stabilizing the order by photo-polymerization. This method further requires that an aligning layer has to been used to be formed on the surface of the glass plates. The degree of alignment of the dye depends upon the degree of the alignment of the liquid crystal material, so the polarizer does not have a sufficient polarizing power due to low alignment of the liquid crystal material. Order in these films is limited by the nematic or smectic LC order. This results in polarizing films with quite low dichroic ratios of about 10. In addition there is a known problem with the alignment of smectic phases.

A photo-alignment technology to prepare a thin photo-aligned polarizer has been proposed. With a birefringent mask, this technique makes the fabrication of multi-domain structures more effective. Thin films of photochemically stable dichroic molecules aligned with light were prepared. Besides advantages of such films with respect to the thickness such polarizers have dichroic ratio of about 10 and are not stable to heat.

Films containing highly oriented dichroic dyes and particularly films which include micropatterned, highly oriented dichroic dyes and their easy manufacture are thus in high demand.

2. Photo-alignment layer for liquid crystals

Liquid crystal display (LCD) devices are widely used as displays for mobile terminals, notebook computers, office equipment, video equipment, and the like. This is because LCD devices have advantages of small size, lightweight and low power consumption.

The alignment layer for LCDs and other liquid crystal (LC) devices are usually based on a polyimide film. The alignment of LC is induced by mechanical rubbing or brushing. However, tiny particles and static charges are generated in this process and these have been reported as one of the major causes in defective displays.

In contrast, photo-alignment technology is a clean, non-contact process. Photo-alignment methods include photo-decomposition, photo-polymerization, photocrosslinking, and photo-isomerization reaction. In these methods,

optical anisotropy is brought about in an alignment layer by inducing an angular-selective photo-reaction when illuminated by polarized light.

In the photo-decomposition method, liquid crystals are arranged by inducing optical anisotropy using a photo-decomposition reaction that selectively breaks partial bonds of the molecules in a specific direction by the application of linearly polarized ultraviolet light to a polymer layer consisting of a photo-alignment material. The material typically used in this method is polyimide. Although polyimide requires the application of ultraviolet light for a relatively long time to induce liquid crystal alignment, a polyimide alignment layer formed by photo-decomposition has a relatively high thermal stability as compared to other photo-alignment layers fabricated by other methods.

In the photo-polymerization method, liquid crystals are arranged by polymerizing the molecules in a specific direction by applying linearly-polarized light to an alignment layer where polymerization is to occur.

In the photo-isomerization method, cis-trans isomers are formed by polarized light. Thus, liquid crystals are aligned by the direction generated from the transformation of the produced isomers.

The photo-alignment materials are mainly polymers with photo-sensitive groups in the main or side chain. There are also low molecular weight materials that are used in photo-alignment layers. The main problem of these materials is the solubility of the material in the liquid crystals. Applying inter-molecular hydrogen bonding between the molecules to stabilize the film can solve this problem. Low molecular weight materials can also be cross-linked forming a polymeric material.

Although the photo-alignment technique is a non-contact technique for producing alignment layers for liquid crystals and, in addition, provides, in some cases, the possibility of micro-patterning of LC alignment, it still cannot replace alignment by rubbed polyimide in large scale production. The main requirements of materials for photo-alignment layers are high values of anchoring energy, alignment with desirable pretilt angle, and high thermo-stability to be processed in LCD production. The final requirement is to provide the possibility of micro-patterning of the aligned liquid crystals.

3. Reversible optical data storage medium

Recording optical data storage media using special light-absorbing substances or mixtures thereof are particularly suitable for use in high density optical data storage media. Now, as before, there is a great interest in optical storage media, which have not only high recording densities but also the possibility of reversible storage of information. Materials for digital and holographic data storage are required, especially materials allowing polarisation holography.

The most promising materials, which satisfy demands for reversible optical data storage, are azobenzene containing polymers or blends of (an) azo-dye(s) with a polymer. But practically all these materials lack in thermal stability of recorded information. An additional disadvantage of polymeric materials is that they are expensive to produce.

Their solubility is often a hard problem. Systems with better solubility and proper solvents are required and should result in better film forming properties and a easier processing.

There is a real need for materials for reversible optical data storage of low cost, high thermal stability, and that are stable to the influence of spurious fields.

4. Ionic self-assembled complexes and their advantages

The technique of ionic self-assembly (ISA) (See Adv. Mater., 2003, 15, 673-683) was presented recently. It is a powerful tool to create new nanostructured materials and chemical objects by employment of Coulombic interactions for the self-organization of tectonic units. The ISA strategy is different from the simple coulombic binding of salts because it is usually accompanied by a cooperative binding mechanism, i.e., the first bonds stimulate further binding which propagates towards the final self-assembled structure. The presence of coulombic interactions within an ISA complex stabilizes structural packing and increases the thermostability of the material. The excellent availability of the starting products (charged tectonic units) and the simplicity of synthesis, by neat addition and cooperative stoichometric precipitation with high purity, allow the recombinatorial synthesis of a whole range of functional materials and hybrids with interesting and versatile functions.

It is the problem of the present invention to provide films (self supporting or on a substrate) or layer/coating on such a substrate having a high optical anisotropy or being capable to be converted into a material having such high optical anisotropy which can be used in a variety of optical applications as mentioned above, and which is specifically useful as a polarization film or layer.

For example, the film or layer should preferably exhibit optical properties in such a way that it can be used as a polarizing element, which has excellent polarizing performance and high hydro and thermal resistance. Moreover, it would be desirable that it can be readily utilized at convenient temperatures. Such a film should be reliable and not subject to the influence of spurious fields.

Preferably, it would be advantageous that such a film may include a micro-pattern, having a minimum width in a film plane of not less then 1 micrometer and not greater then 500 micrometers.

The present invention provides a type of low molecular weight material based on ionic self-assembled complexes, which

a) has anionic and cationic groups compensated to 1:1 or about 1:1 charge ratio;
b) contains at least one photosensitive unit;
c) contains at least one hydrophobic group;
d) exists in a crystalline, and/or in a liquid crystalline state, and/or amorphous state;
e) is completely or substantially insoluble in water
f) is soluble in organic solvents.

The above material readily forms non-scattering films on substrates or a layer between two substrates when it is applied to a substrate after dissolving it with an organic solvent or by heating it to appropriately viscosity (liquid crystalline or liquid). Moreover, a self-supporting film may be prepared therefrom in specific cases.

Thus, the invention relates to a self-supporting film or to a film or layer provided on a substrate or between two such substrates, made from the above defined material. The film or layer may have polarizing properties, photoalignment properties and/or optical data storage properties, as will be outlined below in detail.

The film or layer according to the present invention is made from a photosensitive material comprising a water insoluble complex having one of the following sum formulae (I) to (IV)

$$n\,[R\text{-}P\text{-}R']^{m^*+}\; m\,[T]^{n^*-}$$

or

$$m\,[T]^{n^*+}\;\; n\,[R\text{-}P\text{-}R']^{m^*-} \qquad (II)$$

or

$$n\,[R^1\text{-}Q\text{-}R^{1'}]^{m^*+}\; m\,[T]^{n^*-} \qquad (III)$$

or

$$m\,[T]^{n^*+}\; n\,[R^1\text{-}Q\text{-}R^{1'}]^{m^*-} \qquad (IV)$$

wherein

[R-P-R'] and [$R^1$-Q-$R^{1'}$], respectively, are photosensitive tectonic units the photosensitive part of which may undergo a photoreaction, selected from photoisomerizations, photocycloadditions and photoinduced rearrangements, and wherein

P is a group capable of photoisomerization,

Q is a group capable of participating in a photocycloaddition or photoinduced rearrangement reaction, or in a photooxidation reaction,

at least one of R and R' is selected from optionally substituted or functionalized aromatic, preferably aryl-containing groups, and at least one of R and R' is positively or negatively charged, with the proviso that if P is -N=N, R and R' both are independently selected from optionally substituted or functionalised aromatic, preferably aryl-containing groups, and if P has a different meaning, the other of R and R' can alternatively be or contain a straight or branched aliphatic group, e.g. alkyl, cycloalkyl, or alkenyl,

$R^1$ and $R^{1'}$ are independently selected either from optionally substituted or functionalized groups, both or at least one of which being an optionally substituted or functionalized aromatic, preferably aryl-containing group while the other alternatively can be or contain a straight or branched aliphatic group, e.g. alkyl, cycloalkyl, or alkenyl, or from such groups which together with Q form an aromatic system, preferably an aryl ring or heteroaryl ring, with the proviso that either at least one of $R^1$ and $R^{1'}$ is positively or negatively charged or the ring structure and/or a substituent thereon will carry at least one positive or negative charge,

[T] is an organic, tectonic unit carrying at least one positively or negatively charged group and at least one hydrophobic group, and

m, m*, n and n* are preferably selected from or from about 1, 2, 3, 4, 5, 6, 7 or 8, with the proviso that the values of m and m* are identical or do not differ more than 10% from each other and that the values of n and n* are identical or do not differ more than 10% from each other,

or comprising a mixture of such complexes.

Complexes as defined above under formulae (I) to (IV) are designated as ionic self-assembled complexes (ISA). Surprisingly, the films made therefrom are usually - in most cases - non-scattering. In the films, the ISA complex containing the photosensitive unit as defined above may be in an oriented or disoriented state.

1. Light-polarizing films

In a first embodiment of the invention, the film consisting of or comprising the ISA complex as defined in formulae (I) to (IV) above can be a polarizing film useful as a polarizing element, wherein the film is situated on a substrate.

In specific cases, layers of said ISA complexes or of material containing said complexes may be separated by protecting layer(s) which comprise(s) any polymer deposited from a solvent in which ISA complexes are not soluble. The said protecting layer can be omitted, e.g. if a next layer of an ISA complex is deposited from a solvent in which a previous layer of an ISA complex is not soluble.

The presence of several layers in the said film may be necessary when there is a special need to cover a broader spectral range. There is also the possibility to cover a broad spectral range using dyes absorbing in different spectral ranges in one complex /one film layer.

The present invention also encompasses a method of aligning an ISA complex in a polarizing film comprising minimum one step of macroscopic and/or microscopic irradiation of the said film with a light source with/or without combination of electric, magnetic, surface active field, or thermal treatment, wherein selective variation of the special arrangement or orientation of the said ISA complex occurs and is frozen, in the temperature range of crystalline or liquid crystalline state of the complex, after the irradiation is stopped.

2. Photo-alignment layer

According to another embodiment of the invention, the film or layer consisting of or made from ISA complexes as defined in formulae (I) to (IV) is a photo-alignment layer, which usually will have excellent long-term stability to light, heat and moisture.

The photo-alignment layer, which may include a micro-pattern of alignment directions will preferably have a minimum width in a film plane of not less then 1 micrometer and not greater then 500 micrometers.

The present invention also encompasses a liquid crystal display device, which includes a first substrate, a second substrate, a liquid crystal layer between the first and second substrates, and the said photo-alignment layer on the first and/or the second substrate.

The present invention also encompasses a method of fabrication of a liquid crystal display device, which includes preparing a first substrate and a second substrate, forming the said photo-alignment layer, and forming a liquid crystal layer between the first and the second substrates.

The present invention also encompasses a method of aligning the said ISA complex in a photo-alignment layer comprising minimum one step of macroscopic and/or microscopic irradiation of the said layer with a light source with/or without combination of electric, magnetic, surface active field, or thermal treatment, wherein selective variation of the special arrangement or orientation of the said ISA complex occurs and is frozen, in the temperature range of crystalline or liquid crystalline state of the complex, after the irradiation is stopped.

3. Optical data storage

According to yet another embodiment of the invention, the self-supporting layer or the layer deposited on a substrate comprising ISA complex as defined in formulae (I) to (IV) is useful as a device for reversible optical data storage in which information may be repeatedly stored and erased without decomposition of the device. The device for reversible optical data storage will usually be reliable and not subject to the influence of spurious fields. Preferably, the method for storing and erasing the information can be readily utilized at convenient (e.g. environmental) temperatures. It allows high-density recording.

The photosensitive unit of the ISA complex as defined under formulae (I) to (IV) will be in an oriented or disoriented state, and the information is stored in the film by locally reorienting the said state of the film, whereby the reorienting produces a local variation of the ordering of ISA complex.

The present invention also encompasses a method of reversible optical data storage using this device comprising the steps of:

(a) storing information by irradiating the said film with a light source with/or without combination of electric, magnetic, surface active field, or thermal treatment, wherein selective variation of the special arrangement or orientation of the said ISA complex occurs and is frozen, in the temperature range of crystalline or liquid crystalline state of the complex, after the irradiation is stopped. If desired,
(b) the stored information is read from the said device by illuminating the said film with a light source; and if required,
(c) said stored information can be erased by heat and/or by overwriting with the aid of a light source.

The efficiency of the device in reversible optical data storage is based on the photo-induction of optical anisotropy, which provides the properties required for a material which is useful as a storage medium. The device is constructed so that in the storage operation the storage medium is locally reoriented and the information is stored by means of a local variation of the molecular ordering.

Preferably, the ionic self-assembled (ISA) complex

- is a material having relatively low molecular mass;
- has anionic and cationic groups compensated to a charge ratio of 1:1;
- exists in a crystalline, and/or in a liquid crystalline state, and/or amorphous state;
- is completely insoluble in water;
- is soluble in organic solvents which are less polar than water.

Preferably, the photosensitive, tectonic units [R-P-R'] and [$R^1$-Q-$R^{1'}$], respectively, may be selected under any photosensitive unit meeting the following conditions: It should have an aspect ratio (a length of molecular axis to a length of a molecular perpendicular axis) of not less then 2 and more preferably not less then 3, and it should have an angle between its molecular axis and a direction of transition moment from the ground state to the exited state that is not greater then 20 degrees and preferably close to zero.

Photosensitive units capable of achieving a high dichroic ratio of absorbance under photochemical reaction when they are exposed to polarized light are especially preferable. Photosensitive units which can achieve a dichroic ratio of absorbance at the wavelength of highest absorption of not less then 10 and preferable not less then 20 are especially preferred.

The ISA complexes containing a photosensitive unit in accordance with the present invention may exist in crystalline and/or liquid crystalline state. Existence of the ISA complex in liquid crystalline (thermotropic as well as lyotropic) state is preferred. Existence of transitions of the ISA complexes to liquid (isotropic) state is of special preference.

In those embodiments of the invention where the photosensitive, tectonic units of the films are a positive or negatively charged unit of formula [R-P-R'], it is preferred that P is an azo group -N=N-, or comprises more than one such group. However, the invention is not restricted to units [R-P-R'] containing one or more azo groups. For example, P may be -C=N- or, -C=C-. It is preferred in any of the mentioned cases that at least one or the one aromatic moiety which is preferably an aryl moiety is directly bound to the group P.

In those embodiments of the invention where the photosensitive, tectonic units of the films are a positive or negatively charged unit of formula [$R^1$-Q-$R^{1'}$], it is preferred that if Q is a group capable of participating in a photocycloaddition, this is a (2+2) addition or a (4+4) addition, and if Q is a group capable of participating in a photoinduced rearrangement, it is preferred that the rearrangement is that of spiropyranes to merocyanines, or the so called Photo-Fries reaction, and at least one of $R^1$ and $R^{1'}$ is selected from optionally substituted or functionalized groups which comprise at least one aryl moiety or such (a) group(s) which together with Q form an aryl ring or heteroaryl ring. At least one of $R^1$ and $R^{1'}$ is positively or negatively charged, or the ring structure and/or a substituent thereon will carry at least one positive or negative charge

In case the photocycloaddition is a (2+2) addition, Q will preferably contain a -C=C- or a -C=N- bond and will more preferably consist of the group -$CR^2$=$CR^{2'}$- or -$CR^2$=N- wherein $R^2$ and $R^{2'}$ are independently selected under H or an alkyl, preferably a $C_1$-$C_4$ group. Preferably, Q is part of a conjugated p$\pi$-electron system. Examples for respective compounds are cinnamates, imines, stilbenes, chalcones, or p-phenylene diacrylic esters or amides, wherein at least one of $R^1$ and $R^{1'}$ can be an optionally substituted or functionalized phenyl or other aryl or heteroaryl ring and the other is also an optionally substituted or functionalized phenyl or other aryl or heteroaryl ring or a carboxylic ester or carbonamide group or a phenyl carbonyl residue. Examples are Ph-$CR^x$=$CR^x$-Ph, Ph-$CR^x$=$CR^x$-Alkyl, Ph-$CR^x$=$CR^x$-C(O)O-(Ph or Alkyl), (Ph or Alkyl)O(O)C-$CR^x$=$CR^x$-$C_6H_4$-$CR^x$=$CR^x$-C(O)O-(Ph or Alkyl), Ph-$CR^x$=$CR^x$C(O)-(Ph or Alkyl) (with $C^x$ preferably having the meaning of $R^2$ above). All the said groups or residues may be substituted or functionalized, and at least one of $R^1$ and $R^{1'}$ must carry at least one positive or negative charge. Alternatively, Q may be a -C=C- group which is part of a carbocyclic or heterocyclic, preferably aromatic ring, e.g. in coumarins, in thymine or cytosine derivatives, or in maleinic acid anhydride derivatives. According to the above definition, $R^1$ and $R^{1'}$ are in such cases fused to form a

ring structure, together with Q. One or more atoms of this ring structure or, alternatively, a substituent attached thereto may carry the respective at least one positive or negative charge. Again, such compounds, if carrying at least one positive or negative charge, will fall under the scope of the present invention.

In specific cases, when the photocycloaddition is not a (2+2) cycloaddition, Q may comprise more atoms in its backbone and may e.g. be an aromatic $C_6$ ring which can be fused within an aromatic system or may carry suitable residues at least one of which carries the respective charge(s). One example is an anthracene derivative. Anthracenes are known to undergo a (4+4) cycloaddition whereby carbon atoms 9 and 10 will form bridges to a neighbour atom, resulting in formation of a sandwich-like dimer structure.

Moreover, if Q is a group capable of participating in a photooxidation reaction, [$R^1$-Q-$R^{1'}$] may be anthracene or a derivative thereof.

If the photoinduced rearrangement is a Photo-Fries reaction, Q is preferably selected from -OC(O)-, -$NR^x$-C (O)-, -OC(O)NH-, or -HNC(O)NH with $R^x$ being preferably alkyl, more preferably having the meaning of $R^2$ above. In such cases, $R^1$ may be or comprise an aromatic system, preferably aryl and most preferably phenyl, the aromatic ring preferably being directly bound to oxygen or nitrogen, but $R^1$ not being bound to carbon. $R^{1'}$ may be an aliphatic residue, e.g. straight chain, branched or cyclic alkyl having 1 to for example 24 carbon atoms, bound to carbon or nitrogen.

Of course, complexes (I) to (IV) may carry more than one group P or Q, respectively. For example, the said compounds are intended to include bisazobenzenes or trisazobenzenes as well as diacrylic ester compounds, e.g. p-phenylene-diacrylic esters.

If R, R', $R^1$ and/or $R^{1'}$ is an aryl group, it may be or may comprise a homocyclic or heterocyclic ring. Optionally, this ring may be fused to an aromatic system, e.g. a naphthalene or anthracene system. Further, the ring can be substituted or functionalized by one or more substituents.

In the definitions given above, the term "functionalized" shall mean substituted by a substituent which implies an additional functionality to the molecule, e.g. a substituent carrying a charge, like a $SO_3H$ group, or a substituent which can provide the capability of polymerization or polyaddition, e.g. a S-H group, or a polymerizable -C=C-group. The term "substituted" shall mean any other substituent.

$[T]^{n-}$ is preferably selected from units comprising ionic groups selected from -$PO_4^-$, $PO_4^2$, -$SO_4^{2-}$ -$SO_3^-$; -$CO_2^-$. $[T]^{n+}$ is preferably selected from units comprising ionic groups selected under -$NR^3{}_3{}^+$, -C=$NR^3{}_2{}^+$, -C=$NR^{3+}$ where $R^3$ is independently selected from hydrogen or an alkyl, preferably having 1 to 3 carbon atoms, -$P^+R^4{}_3$, where $R^4$ either has the meaning of $R^3$ or, less preferred, is $OR^3$, -$N^+{\equiv}N$ or a N-containing heteratomic ring system.

Of course, the charges on R, R', $R^1$ and $R^{1'}$ may likewise be provided by the presence of any of the ionic groups defined for $[T]^{n+}$ and $[T]^{n-}$ above.

The ionic groups of the units [T] as well as those groups which imply positive or negative charges to [R-P-R'] and [$R^1$-Q-$R^{1'}$] may be bound to the remaining of the respective units via spacer groups. Such a spacer group can be different for each ionic group and can preferably be selected, independently with each other, from -$CR^a{}_2$-, -$CR^a{}_2$O-, -COO-, -CONH-, where $R^a$ is selected under H, $CH_3$ or alkyl chain having a carbon atom number between 3 and 8, where the methyl or higher alkyl group can optionally contain heteroatoms, for example halogen.

In some cases an ISA complex containing a photosensitive(s) unit may be represented as a mixture of minimum two complexes described above. The only restriction is that the ionic and counter-ionic part within the obtained complex should be approximately or specifically 1:1 charge ratio. Such mixtures have special importance for light-polarizing films when wide range coverage of the spectrum is a crucial point.

In one embodiment of the invention, the film as described above consists merely of the ISA complex(es) as defined. In another embodiment, it may comprise at least one additive which modifies the properties of the material. This additive may be selected from organic polymers, compounds which have film forming abilities, plasticizers, liquid crystals and photosensitive compounds differing from those as defined in claim 1. An organic polymer may for example be added in order to modify the film forming properties, the glass transition properties, the flexibility, the suppleness, or the like. In other cases, the ISA complex according to any of formulae (I) to (IV) may be incorporated into a "common" polymer or plastics film in order to modify the optical properties thereof. In the former case, it is preferred that up to about 20, preferably to about 10, and more preferably to about 2-5 % by weight polymer are incorporated into the film. In the latter case, the organic polymer may be present in an amount up to e.g. 80, about 95, or even 98-99 % by weight.

Without wanting to be bound to any theory, the first of the above complex/polymer films as described above could be defined to be a film wherein the ISA complex constitutes a host matrix, while the latter could be defined to be a film wherein the polymer constitutes the said host matrix.

In specific embodiments of the invention, more than one film or layer as described above is present in a stack of two, three or even more layers. These layers may face each other directly, or they may be divided by (an)other layer (s), as outlined below.

The complexes having structures according to formulae (I) to (IV) can easily be prepared from starting salt materials. Conveniently, a salt comprising the charged [R-P-R'] or [$R^1$-Q-$R^{1'}$] unit, and a salt comprising the oppositely charged [T] unit are separately dissolved in water. Next, the water solutions are combined, which is preferably performed

such that the units of the complex to be prepared are present in a molar amount corresponding to the sum formula of compounds (I) to (IV). For example if a complex having the structure $[R-P-R']^{2+}$ 2 $[T]^-$ is to be prepared, a molar ratio of 1:2 of the $[R-P-R']^{2+}$ salt to the $[T]^-$ salt will be employed. Although deviations from this ratio are possible to some extent and in some cases, it is preferred that they should generally not be too large in order to avoid the possibility that the complex remains dissolved after combining the solutions, due to the formation of e.g. micelles of the hydrophobic unit. At least if this condition is met, the complex will precipitate from the aqueous solution. Likewise, a complex mixture may be obtained.

The complex or mixture of complexes having one or more of formulae (I) to (IV) can usually be recovered from the aqueous mixture in 100 % or almost 100% yield. After treating it as required, e.g. by removing residual moisture (active or passive drying), it can be redissolved in a suitable organic solvent. This solvent will be selected by a skilled person without difficulty and will at least in most cases be of less polarity, e.g. an alcohol, ether, chloroform, THF, or the like. If desired, an additive as detailed above may be added, and the solution (more or less viscous) is brought onto a substrate in order to obtain a film (self supporting or not self supporting) or layer. This step may be performed using general techniques, e.g. spin coating, printing, casting, doctor's blading or dipping. Alternatively, the complex may be warmed or heated to become viscous, either alone or in combination with the additive as detailed above, and is cast or otherwise brought into film form. Subsequently, the film or layer is dried or cooled, if required.

The invention shall now be explained in detail in respect to the properties of the films.

1. Light-polarizing films

The light-polarizing film of the invention constitutes of minimum one layer on a transparent support having a planar surface. The support can be a polymer film, a glass plate, or transparent electrode. The said layer comprises an ISA complex containing photosensitive unit(s) in an oriented or disoriented state. Layers of ISA complexes may be separated by a protecting layer, which comprises any polymer deposited from a solvent in which ISA complexes are not soluble. The said protecting layer can be omitted e.g. if a next layer of an ISA complex is deposited from a solvent in which a previous layer of an ISA complex is not soluble. Presence of several layers in the said film can be necessary when there is a special need to cover broader spectral range. Using ISA complexes containing dyes absorbing in different spectral ranges or mixture of ISA complexes allows covering a broad spectral range.

A layer of an ISA complex is produced from solution of the ISA complex in an organic solvent using well known deposition techniques, e.g. printing, spin-coating or casting method. A layer of an ISA complex can be also obtained by pressing the ISA complex between two substrates in appropriate viscous (liquid crystalline or liquid) state.

Aligning of an ISA complex(es) in a light-polarizing film comprises minimum one steps of macroscopic and/or microscopic irradiating the said film with a light source with/or without combination of electric, magnetic, surface active field, or thermal treatment, wherein selective variation of the special arrangement or orientation of the said ISA complex occurs and is frozen, in the temperature range of crystalline or liquid crystalline state of the complex, after the irradiation is stopped. In some cases if a polarizing film consists of minimum two layers the alignment can be made for each layer independently after its deposition.

The thickness of the light-polarizing film typically falls between about 10 nanometers and 10 micrometers. The light-polarizing film may typically have a peak of absorption at between 400 to 800 nm. Alternatively, light-polarizing film may have a peak of absorption in the NIR, or in the IR. The dichroic ration at the wavelength of peak absorption should be not less then 10 and preferably not less then 20.

In specific cases, the peak of absorption may be in the UV.

A film exhibiting optical anisotropy in the UV and in the visible range (birefringence), but without considerable absorption in the visible range, could be used as a retarder.

When the light-polarizing film includes micro-pattern, having a minimum width in the film plane of 1 micrometer through 500 micrometers, the preferred dichroic ratio is not less then 10 and more preferably not less then 20. The pixilated regions of this film can be different in size and their relative positions.

A primary application of the films of this invention is as a part of liquid crystal display devices. The liquid crystal display device is not limited except that the liquid crystal display devices should include a polarizer that itself includes a light-polarizing film of this invention or a micro-polarizer, which contains a micro-patterned light-polarizing film of this invention.

In one particular application a polarizer that itself includes a light-polarizing film of this invention or a micro-polarizer, which contains a micro-patterned light-polarizing film of this invention may be positioned between a liquid crystal layer and a substrate of a liquid crystal cell and serve in addition to polarizing properties as an alignment layer for a liquid crystal.

A described above, the light polarizing films of the invention is easily manufactured to have an appropriate thickness and high dichroic ratio. The polarizer or micro-polarizer and the liquid crystal display device, which utilize them, have desirable contrast properties.

2. Photo-alignment layer

To form a photo-alignment layer using an ISA complex containing photosensitive unit as a photo-alignment material, the ISA complex is uniformly coated on a substrate by spin-coating or casting method from solution of the ISA complex in an organic solvent. Aligning of an ISA complex in a photo-alignment layer comprises minimum one steps of macroscopic and/or microscopic irradiating the said layer with a light source with/or without combination of electric, magnetic, surface active field, or thermal treatment, wherein selective variation of the special arrangement or orientation of the said ISA complex occurs and is frozen, in the temperature range of crystalline or liquid crystalline state of the complex, after the irradiation is stopped. The light from the light source may be non-polarized light, linearly polarized light, circularly polarized light, particularly polarized light or the like, depending on the alignment structure to be implemented. When the photo-alignment layer includes micro-patterns, the pixilated regions of this layer can be different in size and their relative positions having a minimum width in the film plane of 1 micrometer through 500 micrometers.
A photo-alignment layer according to the present invention enables improvement of the optical and thermal stability of the liquid crystal alignment, pre-tilt stability against electrical stress, and improved shock-resistance. Moreover, the principles of the present invention enable improved display quality and an improved LCD display manufacturing method. The photo-alignment layer according to the present invention is able to align liquid crystals in a LC cell or a thin film of LC above such oriented or patterned film.

3. Optical data storage

The device for reversible optical data storage contains a film made of an ISA complex containing photosensitive unit as a storage medium, preferably supported by one or two transparent substrate, such as glass sheets. The device is set up to store information by means by a local variation of the ordering of the ISA complex in the temperature range of crystalline or liquid crystalline state of the complex. The information or image is written by macroscopically or microscopically illuminating the film with light source, which is absorbed by photosensitive units in the film, with/or without combination of electric, magnetic, surface active field, or thermal treatment. The ordering of the ISA complex appears to be stable over the long term and results in a local anisotropy in the optical properties of the film, in particular dichroism and birefringence can be observed. The information can be read with another light source without disturbing the stored information.
The film of an ISA complex containing photosensitive units can be deposited on a substrate by spin-coating or casting method from a solution of an ISA complex in an appropriate organic solvent. The thickness of the film typically falls between about 10 nanometers and 10 micrometers.
It is also possible to write a grating on the film with a line separation of approximately 0.5 micron. This indicates that the resolution limit of the recording is established by the optics rather than the recording medium.
The optical information can be erased from the film either thermally or optically. The molecules of an ISA complex can be made to adopt random orientation by heating the film to isotropic phase of the ISA complex. The information can be erased at lower temperatures by overwriting with light in appropriate geometry of irradiation to randomize the molecular orientations. The new information can be also written by the method described above directly on the previous set without an intermediate erasing step. The preceding information is completely erased on the following writing procedure.
The present invention shall now be further explained by way of non-limiting examples.

EXAMPLE 1

The ISA complex EO+C12D was prepared by 1:1 charge ratio mixing of two aqueous solutions of Ethyl Orange sodium salt and Didodecyldimethylammonium bromide (1 mg/ml). The precipitated complex was then washed several times with water to remove residual salt. The structure of the complex is as follows:

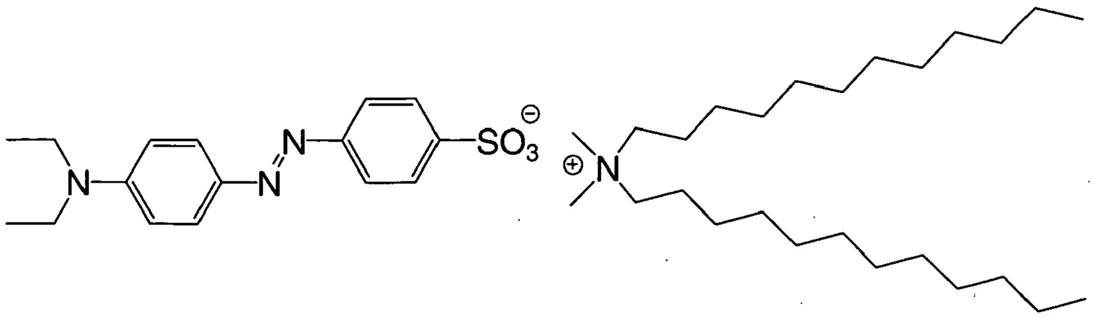

Non-scattering films of the complex were prepared by spin-coating from a solution of the complex in chloroform (5-100 g/l).The films were irradiated with linearly polarized light of an Argon laser (λ=365mn and λ =488nm). After an exposure dose of 1 kJ $cm^{-2}$ the induced anisotropy in the film reaches its maximum. The dichroic ratio in the maximum of absorbance varies between 30 and 50. The discrepancy in the measurements is attributed to the difficulty of measurement of such high anisotropy of absorbance, and could even be higher. Changes of the spectra of a film of the complex before and after irradiation, and spectral distribution of dichroic ratio are presented in Fig. 1. No fatigue of induced dichroic ratio was observed after exposure of the films to daylight and/or after thermal annealing at 150°C for 24 hours. There is even a small increase in the anisotropy.

EXAMPLE 2

The ISA complex DY50+C12D was prepared by 1:1 charge ratio (i.e. in a molar ratio of 1:4) mixing of two aqueous solutions of Direct Yellow 50 and Didodecyldimethylammonium bromide (1 mg/ml). The precipitated complex was then washed several times with water to remove residual salt. The structure of the complex is as follows:

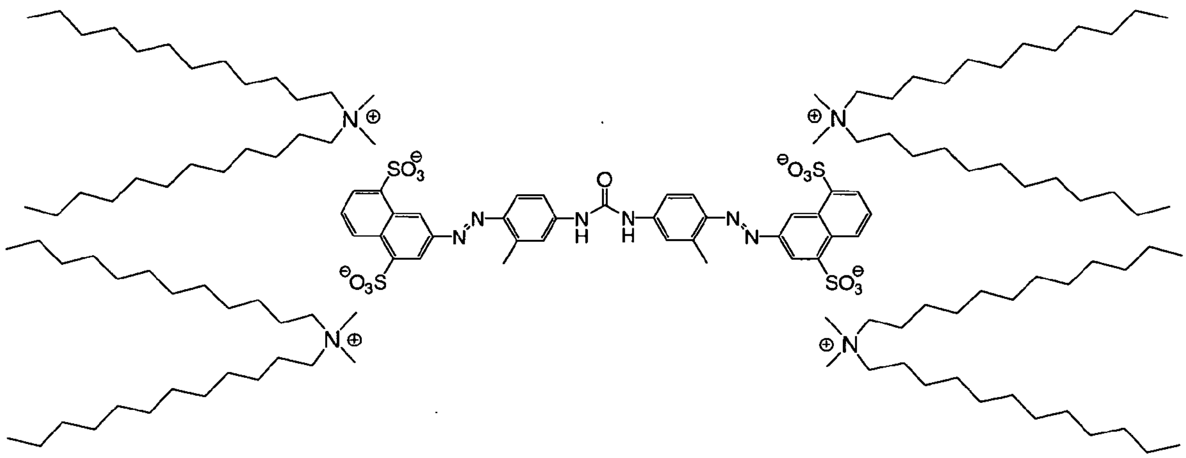

Non-scattering films of the complex were prepared by spin-coating from the solution of the complex in chloroform (5 -100 g/l). The films were irradiated at 100°C with linearly polarized light of an Argon laser (λ =365mn and λ =488nm). After an exposure dose of 1 kJ $cm^{-2}$ the induced anisotropy in the film reaches its maximum. The dichroic ratio in the maximum of absorbance is approximately 20. Changes of the spectra of a film of the complex before and after irradiation, and spectral distribution of dichroic ratio are presented in Fig. 2. No fatigue of induced dichroic ratio was observed after exposure of the films to daylight and/or after thermal annealing at 200°C for 24 hours.

EXAMPLE 3

The ISA complex EO+C16D was prepared by 1:1 charge ratio mixing of two aqueous solutions of Ethyl Orange sodium salt and Dihexadecyldimethylammonium bromide (1 mg/ml). The precipitated complex was then washed several times with water to remove residual salt. The structure of the complex is as follows:

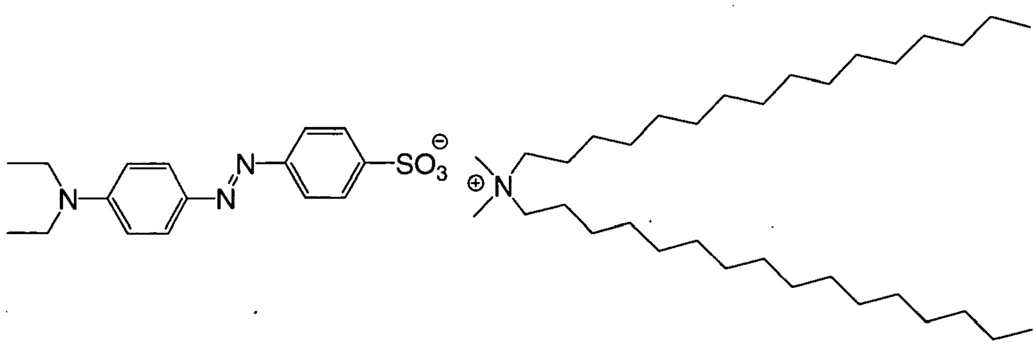

Non-scattering films of the complex were prepared by spin-coating from a solution of the complex in chloroform (5-100 g/l). The films were irradiated with polarized light of an Argon laser ($\lambda$ =488nm). After an exposure dose of about 3 kJ $cm^{-2}$ the induced anisotropy in the film reaches its maximum. The dichroic ratio in the maximum of absorbance varies between 15 and 20. Changes of the spectra of a film of the complex before and after irradiation, and spectral distribution of dichroic ratio are presented in Fig. 3. No fatigue of induced dichroic ratio was observed after exposure of the films to daylight and/or after thermal annealing at 140°C for 24 hours. There is even a small increase in the anisotropy.

EXAMPLE 4

The film of EXAMPLE 3 was irradiated through the mask with polarized light of an Argon laser ($\lambda$ =488nm) at the angle of 45° to the first irradiation. Photos of the irradiated areas are shown in Fig. 4 using a polarising microscope with crossed polarizers.

EXAMPLE 5

Using the film of EXAMPLE 1 a combined liquid crystal cell was prepared. The second substrate was rubbed polyimide layer. The cell was assembled to get twist angle of a liquid crystal of 90°. The thickness of the cell was 10 $\mu$m. The cell was filled with liquid crystal ZLI-4801-000 (Merck) at room temperature. The twist of the liquid crystal was observed to be 90° with uniform mono-domain alignment over the irradiated area.

EXAMPLE 6

Films of the material of EXAMPLE 3 were prepared by spin-coating from a solution of the complex in chloroform (25 g/l). Films thickness was in the range of 100 - 200 nm. The films were irradiated with two circularly polarized interfering beams of an Argon laser ($\lambda$ =488nm). Exposure dose was 1 kJ $cm^{-2}$. The picture of obtained pattern observed in polarizing microscope is shown in Fig. 5 (Bar: 25$\mu$m). A diffraction efficiency of 6-10 % was obtained. No fatigue of the diffraction efficiency was observed after exposure of the films at daylight and/or after thermal annealing at 140°C for 24 hours.

## Claims

1. Self supporting or substrate-supported film or layer of a photosensitive material comprising a water insoluble complex having one of the following sum formulae (I) to (IV)

$$n\,[R\text{-}P\text{-}R']^{m^*+}\; m\,[T]^{n^*-} \qquad (I)$$

or

$$m\,[T]^{n^*+}\; n\,[R\text{-}P\text{-}R']^{m^*-} \qquad (II)$$

or

$$n\,[R^1\text{-}Q\text{-}R^{1'}]^{m^*+}\ m\,[T]^{n^*-} \qquad (III)$$

or

$$m\,[T]^{n^*+}\ n\,[R^1\text{-}Q\text{-}R^{1'}]^{m^*-} \qquad (IV)$$

wherein
[R-P-R'] and [$R^1$-O-$R^{1'}$], respectively, are photosensitive tectonic units the photosensitive part of which may undergo a photoreaction, selected from photoisomerizations, photocycloadditions and photoinduced rearrangements, and wherein
P is a group capable of photoisomerization,
Q is a group capable of participating in a photocycloaddition or photoinduced rearrangement reaction, or in a photooxidation reaction,
at least one of R and R' is selected from optionally substituted or functionalized aromatic, preferably aryl-containing groups, and at least one of R and R' is positively or negatively charged, with the proviso that if P is -N=N, R and R' both are independently selected from optionally substituted or functionalised aromatic, preferably aryl-containing groups, and if P has a different meaning, the other of R and R' can alternatively be or contain a straight or branched aliphatic group,
$R^1$ and $R^{1'}$ are independently selected either from optionally substituted or functionalized groups, both or at least one of which being an optionally substituted or functionalized aromatic, preferably aryl-containing group while the other alternatively can be or contain a straight or branched aliphatic group, or from such groups which together with Q form an aromatic system, preferably an aryl ring or heteroaryl ring, with the proviso that either at least one of $R^1$ and $R^{1'}$ is positively or negatively charged or the ring structure and/or a substituent thereon will carry at least one positive or negative charge,
[T] is an organic, tectonic unit carrying at least one positively or negatively charged group and at least one hydrophobic group, and
m. m*, n and n* are preferably selected from or from about 1, 2, 3, 4, 5, 6, 7 or 8, with the proviso that the values of m and m* are identical or do not differ more than 10% from each other and that the values of n and n* are identical or do not differ more than 10% from each other;
or comprising a mixture of such complexes.

**2.** Film or layer according to claim 1, wherein

(a) group P or group Q in formulae (I) to (IV) are selected from -N=N-, -$CR^2$=$CR^{2'}$- with $R^2$, $R^{2'}$ being independently selected from H, CN or $C_1$-$C_4$ alkyl, or
(b) wherein group P or group Q in formulae (I) to (IV) are a group containing more than one -N=N- and/or -$CR^2$=$CR^{2'}$- moieties in a electron-conjugated system, or
(c) wherein $R^1$ and $R^{1'}$ are independently selected from entities having more than one optionally substituted or functionalized aliphatic group and/or optionally substituted or functionalized aryl-containing groups and entities having more than one group which together with one or more groups Q form an aryl ring or heteroaryl ring.

**3.** Film or layer according to claim 1 or 2, wherein one of R or R' or of $R^1$ or $R^{1'}$ contains at least one additional moiety comprising one or more -N=N-, and/or -$CR^2$=$CR^{2'}$- groups.

**4.** Film or layer according to any of claims 1 to 3 wherein [T] contains one or more than one groups, and the or each of said hydrophobic groups contain at least 6, preferably at least 10 carbon atoms.

**5.** Film or layer according to claim 4, wherein the hydrophobic group(s) is/are (a) straight or branched hydrocarbon chain(s), selected from optionally substituted or functionalized alkyl, alkenyl, aryl, or arylalkyl, or is/are (an) polyalkylenoxide chain, preferably a polyethylenoxide or polypropylenoxide chain.

**6.** Film or layer according to any of the preceding claims, wherein in formulae (I) or (II), R and R' are both aryl moieties,

preferably directly bound to the group P, and/or wherein in formulae. (III) or (IV), $R^1$ and $R^{1'}$ are selected from aryl moieties directly attached to Q, and -C(O)O- and -(CO)$NR^3$ groups wherein $R^3$ is H or a optionally substituted alkyl or aryl group.

**7.** Film or layer according to any of claims 1 to 5, wherein the at least one photosensitive compound is selected from monoazo compounds, bisazo compounds, trisazocompounds, and preferably from azobenzenes, bisazobenzenes, trisazobenzenes, and further from stilbenes, cinnamates, imines, anthracenes, coumarines, chalcones, p-phenylene diacrylates or diacrylamides, thymin derivatives, cytosine derivatives, merocyanines/spiropyranes, derivatives of maleinic acid anhydride, and anthracene.

**8.** Film or layer according to any of the preceding claims, wherein $[T]^{n-}$ comprises ionic groups selected from $-PO_4^-$, $PO_4^2$, $-SO_4^{2-}$ $-SO_3^-$; $-CO_2$-, or $[T]^{n+}$ comprises ionic groups selected from $-NR^3{}_3{}^+$, $-C{=}NR^3{}_2$, $-C{=}NR^3$, where $R^3$ is hydrogen or an alkyl having 1 to 3 carbon atoms, $-P^+R^4{}_3$, where $R^4$ either has the meaning of $R^3$ or is $OR^3$, $N^+{\equiv}N$, or a N-containing heteratomic ring system.

**9.** Film or layer according to any of the preceding claims, wherein $[T]^{n+}$ or $[T]^{n-}$ is selected from a charged amphiphile, selected under fatty acids, partially hydrolyzed triglycerides, tetraalkyl ammonium or protonated trialkyl ammonium compounds having one, two or three alkyl groups with at least 6 carbon atoms, hydrophobic dyes.

**10.** Film or layer according to any of the preceding claims, comprising at least one additive which modifies the properties of the material, preferably selected from organic polymers, compounds which have film forming abilities, plasticizers, liquid crystals and photosensitive compounds differing from those as defined in claim 1, wherein the additive, if being an organic polymer, is present in an amount up to about 95 % by weight.

**11.** Film or layer according to any of the preceding claims, wherein at least two complexes selected from those of formulae (I) to (IV) are present in the film.

**12.** Film or layer according to any of the preceding claims which is patterned or structured.

**13.** Film or layer according to any of the preceding claims having a thickness between about 10 nm to about 40 μm, preferably to about 10 μm.

**14.** Film or layer according to any of the preceding claims, wherein the film or layer is a stack of films or layers comprising more than one film or layer of the photosensitive material as defined in claim 1, wherein either said films or layers face each other directly, or each of the photosensitive material containing film or layers is separated from another such film or layer by a protecting layer, the protecting layer comprising of or consisting of any polymer deposited from a solvent in which the complex(es) of formulae (I) to (IV) as used in at least the films or layers above and below the protecting layer are not soluble.

**15.** Film or layer according to any of the preceding claims, the material of which being capable to change at least one optical property, preferably selected from birefringence, dichroism, refraction, or fluorescence anisotropy, upon irradiation with light.

**16.** Film or layer according to claim 15, irradiated such that its optical properties are either

(a) homogeneous through the material or
(b) varied through the material or through restricted areas thereof.

**17.** Film or layer according to claim 16, variant (b), wherein optical properties are modulated in one, two or three dimensions including modulation in the direction perpendicular to the film plane, in any direction in the film plane or along the axis tilted to the film plane.

**18.** Film or layer according to any of claims 15 to 17 having the properties of a light-polarizing film or of a photo-alignment layer for a liquid crystal, the film being provided on a transparent support, the support being preferably selected from a polymer film, a glass plate, or a transparent electrode.

**19.** Film or layer according to claim 18 wherein the light-polarizing film has a peak of absorption at between 400 to 800 nm, or in the NIR, or in the IR, or in the UV, and/or a dichroic ratio at the wavelength of peak absorption is not less

then 10.

**20.** Film or layer according to any of claims 18 or 19 having a micro-pattern of minimum width in the film plane of 1 micrometer through 500 micrometers wherein the pixilated regions of this film can be different in size and their relative positions.

**21.** Film or layer according to any of claims 15 to 17 having the properties of an optical data storage medium, the film or layer preferably provided on a transparent substrate that has optionally already been coated with one or more reflecting layers and onto whose surface a photo-recordable information layer, optionally one or more reflecting layers and optionally a protective layer or an additional substrate or a top layer are applied.

**22.** Film or layer according to claim 21 wherein the data in the storage medium can be recorded on and read using a light, preferably a laser light such that in the storage operation the storage medium is locally reoriented and the information is stored by means of a local variation of the molecular ordering.

**23.** Method for the preparation of a film or layer according to any of the preceding claims, comprising the following steps:

(a) dissolving a complex having any of formulae (I) to (IV) as defined in claim 1 or a mixture of such complexes, in an organic solvent wherein it is soluble, or heating it until it is in a viscous state,
(b) preparing a homogeneous film from the solution or viscous material obtained in step (a), preferably by spin coating, printing, casting, doctor's blading or dipping, either in the form of a continuous film or having a predesigned pattern, and
(c) drying or cooling said film.

**24.** Method for the preparation of a film or layer according to claim 10 or any claim depending thereon, comprising the following steps:

(a) dissolving a complex having any of formulae (I) to (IV) as defined in claim 1 or a mixture of such complexes, in an organic solvent wherein it is soluble, or heating it until it is in a viscous state,
(b) mixing the solution or viscous material obtained in step (a) with the said additive,
(c) preparing a homogeneous film from the mixture obtained in step (b), preferably by spin coating, printing, casting, doctor's blading or dipping, either in the form of a continuous film or having a predesigned pattern, and
(d) drying or cooling said film.

**25.** Method according to any of claims 23 or 24, wherein the complex(es) used in step (a) is/are obtained by the following steps:

(e) separately dissolving at least one salt of any of the photosensitive tectonic units defined in formulae (I) to (IV) and at least one salt of any of the tectonic units [T] defined in formulease (I) to (IV) in water,
(f) combining the said solutions in a molar ratio which corresponds to the complex(es) of formulae (I) to (IV) to be obtained, and
(g) recovering the solid complex or mixture of complexes of any of formulae (I) to (IV) from said solution.

**26.** Method for the preparation of film or layer according to claim 16, variant (a), comprising preparing a film as defined in any of claims 23 to 25 and irradiating said film or a part of it with a homogeneous light field.

**27.** Method for the preparation of a film or layer according to claims 16, variant (b), and 17, comprising preparing a film as defined in any of claims 23 to 25 and irradiating said film or part of it with an inhomogeneous light field, provided by a mask or by an interference pattern of at least two intersecting coherent beams.

**28.** Method according to claims 26 or 27, wherein either the wavelength, the irradiation time, the number of the irradiating beams and/or the polarization, the intensity, the incidence angle of at least one irradiating beam is varied to control the direction, the value and/or the modulation type of the induced optical anisotropy.

**29.** Method according to claims 27 or 28, further comprising varying the mask spacing or the period, intensity or polarization of the interference pattern in order to control the spatial modulation of optical anisotropy.

**30.** Method for the preparation of a film or layer according to claims 16 variant (b) and 17, comprising preparing a film

as defined in any of claims 23 to 25 and inhomogeneously irradiating said film, preferably through a mask, with a focused beam, with near field, or with an interference pattern of at least two intersecting coherent beams.

**31.** Method according to claim 26 or 30, wherein the irradiation is macroscopic and/or microscopic and wherein irradiation is with/or without combination of electric, magnetic, surface active field, or thermal treatment, wherein selective variation of the special arrangement or orientation of the said ionic self-assembled complex occurs and is frozen, in the temperature range of crystalline or liquid crystalline state of the complex, after the irradiation is stopped.

**32.** Method according to any of claims 23 to 25, wherein the film consists of minimum two photosensitive layers and the alignment is made for each layer independently after its deposition.

**33.** Use of a film or layer as claimed in any of claims 1 to 22 as a photosensitive medium, polarization element, light retarder element, photo-alignment layer for a liquid crystal, optical element, functional surface, diffractive element, focusing element or any combination of said elements.

**34.** Use of a material as claimed in claims 16 wherein the light-induced property is reversible, as an element for optical or optical/thermal switching, or wherein the light-induced property is reversible or irreversible, as a medium for real-time reversible and irreversible holography, digital optical data storage or optical information processing.

**35.** Use according to claim 33, wherein the photosensitive medium is a medium for irreversible or reversible optical data storage.

**36.** Use according to claim 35, wherein written information can be eliminated by irradiation or heating, whereafter another writing cycle is possible.

**37.** Method of reversible optical data storage in an optical data storage medium of claim 21 comprising the steps of:

(a) storing information by irradiating the said film with a light source with/or without combination of electric, magnetic, surface active field, or thermal treatment;
(b) reading stored information from the said device by illuminating the said film with a light source;
(c) erasing said stored information by heat and/or by light.

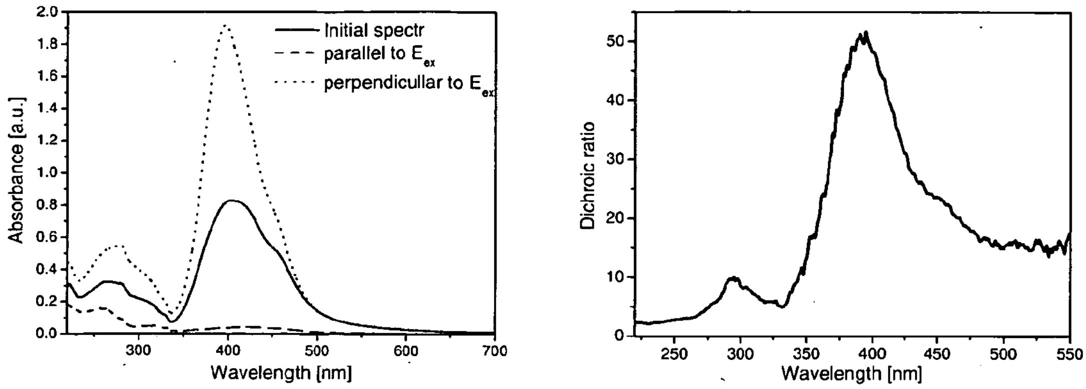


FIGURE 1

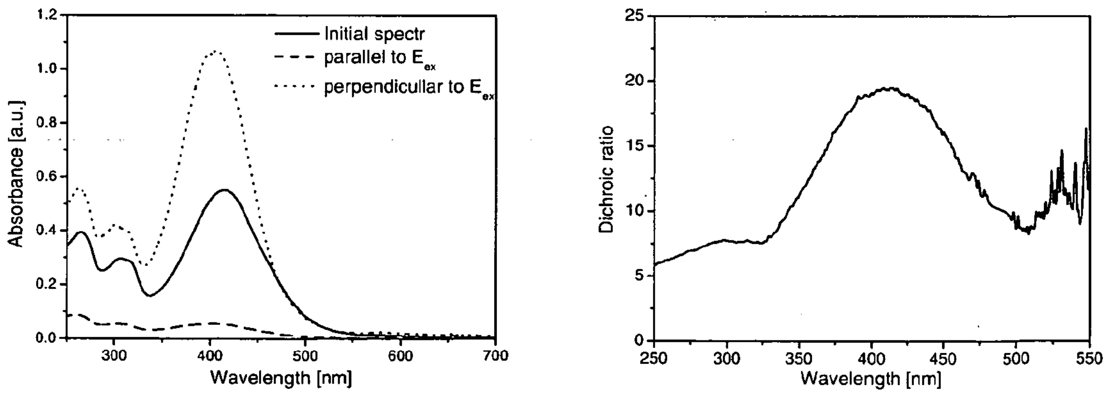


FIGURE 2

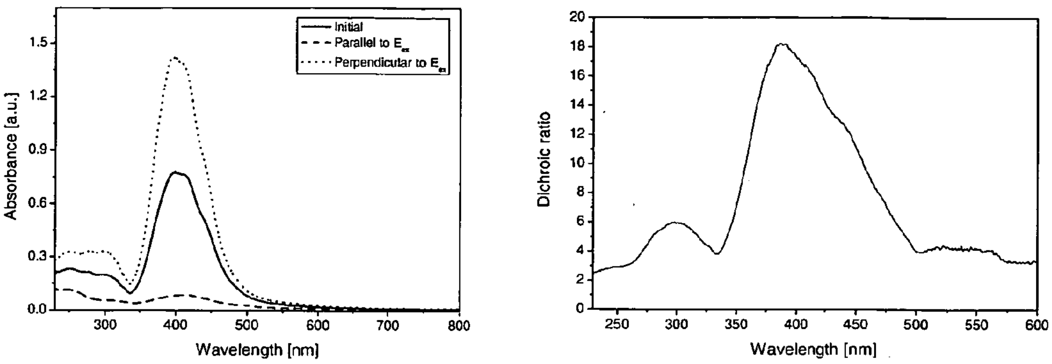


FIGURE 3

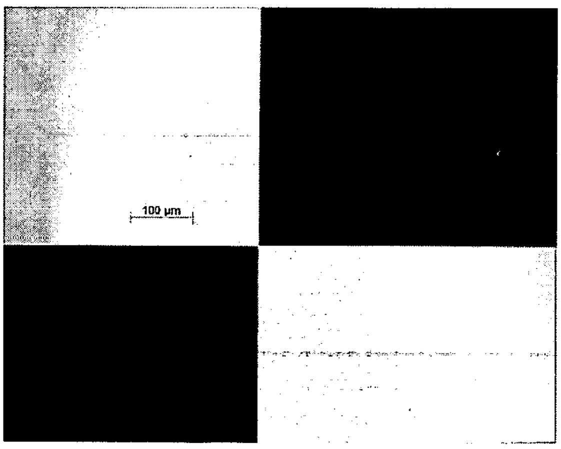


FIGURE 4a

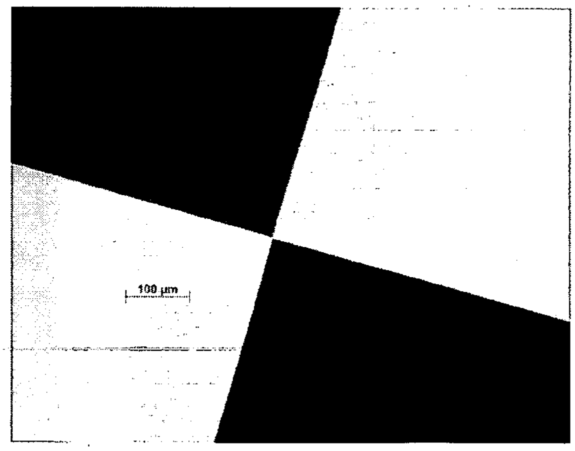


FIGURE 4b

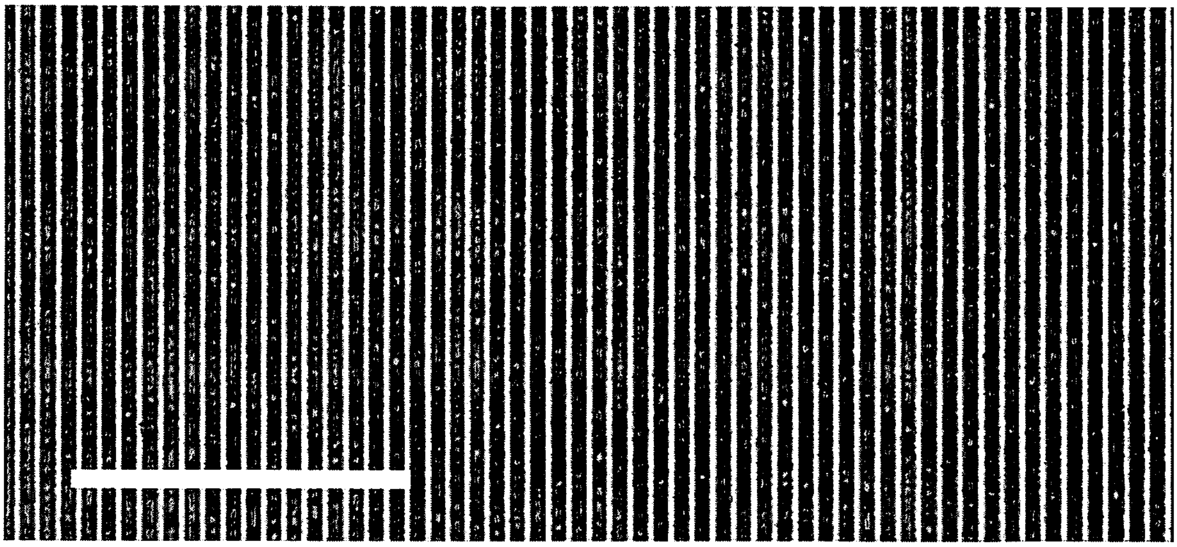

FIGURE 5

European Patent Office

# EUROPEAN SEARCH REPORT

Application Number
EP 05 00 9865

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 2005/025422 A1 (MAGNUSSON ROBERT ET AL) 3 February 2005 (2005-02-03)<br>* claims 4,5; figures 9a,b; examples 1,2 *<br>----- | 1,23,33, 37 | G11B7/244<br>G02B5/30 |
| A | EP 0 555 793 A (HOECHST CELANESE CORPORATION) 18 August 1993 (1993-08-18)<br>* page 3, line 17 - page 4, line 54 *<br>* claim 1; examples 1,2 *<br>----- | 1,23,33, 37 | |
| A | EP 1 385 051 A (ASML NETHERLANDS B.V) 28 January 2004 (2004-01-28)<br>* claims 1,2 *<br>----- | 1,23,33 | |

TECHNICAL FIELDS SEARCHED (Int.Cl.7)

G11B
G02B

The present search report has been drawn up for all claims

| Place of search | Date of completion of the search | Examiner |
|---|---|---|
| The Hague | 19 October 2005 | Vanhecke, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1

EPO FORM 1503 03.82 (P04C01)

## ANNEX TO THE EUROPEAN SEARCH REPORT ON EUROPEAN PATENT APPLICATION NO. EP 05 00 9865

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2005

| Patent document cited in search report | | Publication date | Patent family member(s) | | Publication date |
|---|---|---|---|---|---|
| US 2005025422 | A1 | 03-02-2005 | NONE | | |
| EP 0555793 | A | 18-08-1993 | JP | 6012669 A | 21-01-1994 |
| | | | US | 5251197 A | 05-10-1993 |
| EP 1385051 | A | 28-01-2004 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *Adv. Mater.,* 2003, vol. 15, 673-683